Europäisches Patentamt

European Patent Office

Office européen des brevets

(11) Veröffentlichungsnummer: **0 278 573 B1**

(12) **EUROPÄISCHE PATENTSCHRIFT**

(45) Veröffentlichungstag der Patentschrift: **30.12.92**

(21) Anmeldenummer: **88200224.9**

(22) Anmeldetag: **09.02.88**

(51) Int. Cl.⁵: **C03B 37/16**, G02B 6/25

(54) Verfahren und Anordnung zum Trennen einer Gruppe von Lichtwellenleitern.

(30) Priorität: **12.02.87 DE 3704273**

(43) Veröffentlichungstag der Anmeldung:
**17.08.88 Patentblatt 88/33**

(45) Bekanntmachung des Hinweises auf die
Patenterteilung:
**30.12.92 Patentblatt 92/53**

(84) Benannte Vertragsstaaten:
**DE FR GB IT**

(56) Entgegenhaltungen:
**EP-A- 0 208 415**
**GB-A- 2 147 577**
**GB-A- 2 152 495**
**GB-A- 2 174 085**

**PATENT ABSTRACTS OF JAPAN, Band 5, Nr.
16 (C-41)[688], 30. Januar 1981; & JP-A-55 144
444 (FURUKAWA DENKI KOGYO K.K.)
11-11-1980**

**PATENT ABSTRACTS OF JAPAN, Band 10,
Nr. 348 (P-519)[2404], 22. November 1986; &
JP-A-61 148 407 (SUMITOMO ELECTRIC IND.
LTD) 07-07-1986**

(73) Patentinhaber: **Philips Patentverwaltung**

**GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Boehm, Detlef
Baumweg 16
W-5206 Neunkirchen S. 1(DE)**
Erfinder: **Grzesik, Ulrich, Dr.
August Kierspel-Strasse 161
W-5060 Bergisch-Gladbach 2(DE)**
Erfinder: **Fröhlich, Günter
Stuppstrasse 18
W-5000 Köln 30(DE)**

(74) Vertreter: **Koch, Ingo, Dr.-Ing. et al
Philips Patentverwaltung GmbH Wendenstrasse 35 Postfach 10 51 49
W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Trennen einer Gruppe von Lichtwellenleiter, bei welchem ein Längenabschnitt der Lichtwellenleiter in gestreckter Lage und parallel in einer Ebene geführt zwischen zwei Klemmeinrichtungen einer Trennvorrichtung gehalten wird, und bei welchem die Lichtwellenleiter durch ein im mittleren Bereich des Längenabschnitts angreifendes, sich über sämtliche Lichtwellenleiter erstreckendes gemeinsames Kerbmesser geritzt werden, indem dessen etwa parallel zur Ebene der Lichtwellenleiter verlaufende Kerbschneide zur Fläche des Stempels hin bis zu einem durch einen Anschlag vorgegebenen Abstand gedrückt wird, welcher kleiner als der minimal mögliche Durchmesser der Lichtwellenleiter ist, und bei welchem die Lichtwellenleiter über einen gegen die Lichtwellenleiter gedrückten gewölbten Stempel gespannt und dabei an der Kerbstelle getrennt werden.

Ein derartiges Verfahren und eine Anordnung zur Ausübung dieses Verfahrens sind durch die GB-A-21 74 085 bekannt. Dabei werden die Lichtwellenleiter über eine gewölbte Fläche eines Ambosses gelegt und mittels gegeneinander beweglicher Halterungen verspannt. Danach werden die Lichtwellenleiter geritzt und durch eine vom Stempel erzeugte Zugspannung an den Kerbstellen aufgetrennt. In dieser Druckschrift ist auch bereits erwähnt, daß unter Spannung geritzte Lichtwellenleiter darauffolgend automatisch brechen.

Die Qualität der Trennfläche muß bei LWL bekanntlich hohen Anforderungen genügen, wie es beispielsweise in der DE-PS 27 47 323 ausführlich erläutert ist. Die Einkerbtiefe darf ein bestimmtes Maß nicht überschreiten. Da jedoch die einzelnen LWL einer Gruppe, z.B. die LWL eines Bandkabels, toleranzbedingt unterschiedliche Durchmesser aufweisen können, besteht die Gefahr, daß durch ein alle LWL gleichzeitig kerbendes gemeinsames Kerbmesser entweder die dickeren LWL zu tief oder die dünneren LWL zu wenig angekerbt werden.

Deshalb ist bei einer nach der GB-OS 21 52 495 bekannten Vorrichtung vorgesehen, die Stempeloberfläche aus einem nachgiebigen Material herzustellen, in welches sich die LWL beim Angriff des Kerbmessers unterschiedlich weit eindrücken. Ein genügend gleichmäßiges Ankerben sämtlicher LWL läßt sich jedoch auch mit dieser bekannten Vorrichtung nicht erreichen.

Der Erfindung liegt die Aufgabe zugrunde, das Verfahren der eingangs genannten Art derart zu verbessern, daß sich mit geringem Aufwand eine gleichmäßig gute Qualität der Trennflächen sämtlicher LWL ergibt.

Die Lösung gelingt dadurch, daß die Lichtwellenleiter zunächst in die Klemmeinrichtung geklemmt werden, daß danach der Stempel bis an einen Anschlag gegen die Lichtwellenleiter gedrückt wird, so daß in den Lichtwellenleitern eine mechanische Spannung entsteht, und daß das Kerbmesser auf die Lichtwellenleiter gedrückt wird, wodurch die Lichtwellenleiter so weit eingekerbt werden, daß sie infolge der durch den Druck des Stempels bewirkten Spannung individuell getrennt werden.

Eine Anordnung zur Ausübung dieses Verfahrens ist im Anspruch 2 gekennzeichnet.

Die LWL, welche selbstverständlich im Trennbereich von ihrer Hülle zu befreien sind, haben Durchmesserschwankungen von einigen μm. Die Kerbschneide des Kerbmessers, z.B. eines Diamanten, trifft zunächst auf den dicksten der LWL und kerbt ihn bis zu einer geringen Mindesttiefe an, bei deren Erreichen wegen der bereits vorher aufgebrachten Zugkraft ein Bruch mit zur Achse der LWL senkrechter Trennfläche entsteht. Danach kann das Kerbmesser weiter in den nächstdicken LWL eindringen, welcher dann auf gleiche Weise gebrochen wird.

Das erfindungsgemäße Verfahren ermöglicht mit einer vergleichsweise einfachen Vorrichtung gleichmäßige und qualitativ hochwertige Trennflächen. Maßnahmen zur genauen Begrenzung der Kerbkraft des Kerbmessers brauchen nicht vorgesehen zu werden, da die LWL automatisch brechen, bevor zu große Kerbkräfte entstehen können. Es empfiehlt sich, den Weg des Kerbmessers in der Weise zu begrenzen, daß bei seiner Weiterbewegung die Trennflächen der LWL nicht beschädigt werden. Das Kerbmesser muß sanft auf die LWL gedrückt werden.

Als besonders vorteilhaft hat sich eine sanfte automatische Steuerung des Bewegungsablaufs erwiesen, bei welchem die Geschwindigkeit des Kerbmessers durch eine geeignete Dämpfungseinrichtung gedämpft und begrenzt ist.

Es ist auch vorteilhaft, die Kraftwirkung des Kerbmessers durch eine Pufferfeder zu begrenzen oder definiert einzustellen, was auch zusätzlich zu der Geschwindigkeitsdämpfung vorgesehen sein kann.

Auch bei zur Erzielung unterschiedlicher Zugkräfte erforderlichen unterschiedlichen Stempelhüben bleibt stets der Mindestabstand zwischen Stempel und Kerbmesser erhalten, wenn die Halterung für das Kerbmesser mit dem Stempel kinematisch gekoppelt ist.

Es ist grundsätzlich möglich, das Kerbmesser an einer zurückschwenkbaren Halterung fest anzuordnen und das Kerben durch eine Schwenkbewegung der Halterung zu bewirken. Dabei ist die Kerbschneide so anzuordnen, daß sie in der Kerbstellung weitgehend parallel zur Ebene der LWL verläuft.

Bevorzugt wird jedoch eine Ausführung einer Vorrichtung, welche dadurch gekennzeichnet ist, daß der Halteblock für das Kerbmesser an einem zur Richtung der LWL im wesentlichen in senkrechter Ebene von einer zurückgeschwenkten Ruhelage in eine spielfrei durch einen Festanschlag definierte Arbeitslage schwenkbaren Haltearm angeordnet ist, an welchem das Kerbmesser in der Arbeitslage mit geringem Abstand dem LWL gegenüberliegt, und daß das Kerbmesser bzw. dessen Halterung in senkrechter Richtung im schwenkbaren Arm gegen die LWL bewegbar ist.

Bei zurückgeschwenktem Haltearm läßt sich die Gruppe von LWL unbehindert in die Vorrichtung einlegen. In der Arbeitslage besteht dagegen nur ein geringer Abstand des Kerbmessers zu den LWL, so daß der Aufwand für die von der Schwenkbewegung des Haltearms völlig unabhängige Steuerung der senkrechten Bewegung des Kerbmessers gering gehalten werden kann.

Eine Anschlagbegrenzung für den Anpreßweg des Stempels ist wesentlich, um eine definierte Spannung in den LWL zu erhalten. Der Anschlag sollte verstellbar sein, um verschiedene Zugkräfte einstellen zu können.

Die Erfindung wird anhand eines in der Zeichnung dargestellten vorteilhaften Ausführungsbeispiels näher erläutert.

Fig. 1 zeigt die Seitenansicht einer erfindungsgemäßen Vorrichtung in vereinfachter Darstellung

Fig. 2 zeigt im Längsschnitt die gedämpfte Transversalführung des Kerbmessers

Fig. 3 zeigt schematisch die Schwenkführung des Haltearms für das Kerbmesser

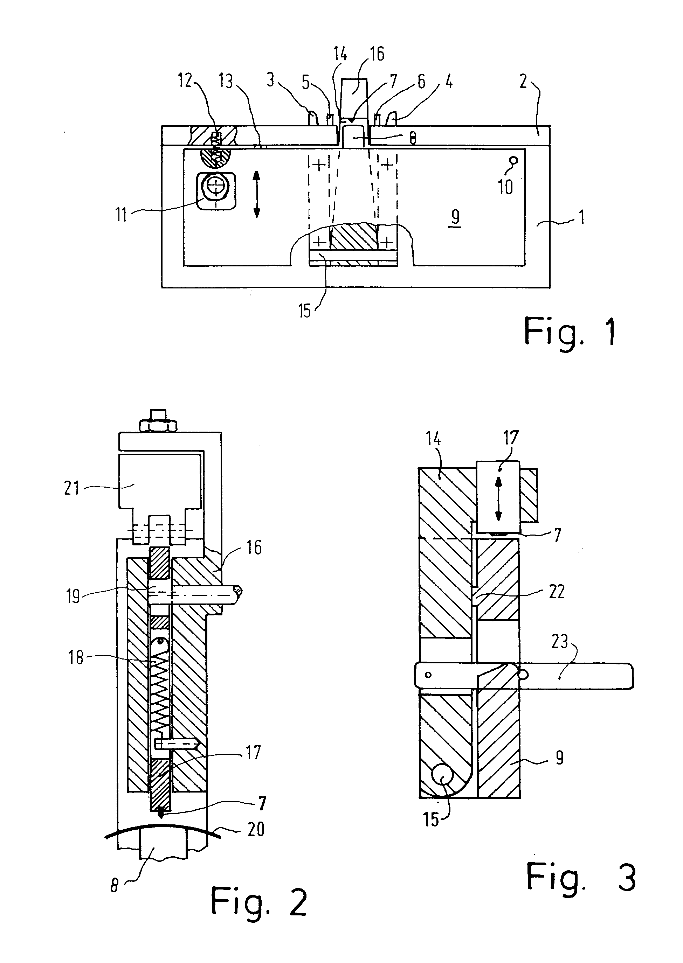

Die obere Öffnung eines in Figur 1 angedeuteten Gehäuses 1 ist durch eine Trägerplatte 2 abgeschlossen, auf welcher in bekannter Weise insbesondere Führungseinrichtungen wie Kämme 3 und 4 und Klemmstücke 5 und 6 angeordnet sind. Die in die Kämme 3 und 4 eingefädelten nicht dargestellten LWL verlaufen zwischen dem Kerbmesser 7 und dem Stempel 8 und werden durch die Klemmstücke 5 und 6 in nicht dargestellte Führungsrinnen der Trägerplatte 2 geklemmt. Der Stempel 8 sollte einen niedrigen Haftreibungskoeffizienten gegenüber den LWL aufweisen und aus einem weicheren Werkstoff als diese bestehen.

Durch Anheben des Stempels 8 wird eine Zugspannung in den zwischen den Klemmstücken 5 und 6 befindlichen Bereichen der LWL hervorgerufen. Der Stempel 8 ist an einer Schwenkplatte 9 befestigt, welche um die Achse 10 mittels eines Exzenterantriebs 11 entgegen Druckfedern 12 bis an einen verstellbaren Anschlag 13 verschwenkbar ist, wodurch der Stempel in gewünschtem Ausmaß gegen die LWL gedrückt werden kann.

Das Einlegen der LWL in die Vorrichtung wird dadurch erleichtert, daß der Haltearm 14 für das Kerbmesser 7 zurückschwenkbar mittels der Drehachse 15 an der Schwenkplatte 9 gelagert ist. Beim Auslenken des Stempels wird zwangsläufig der Halteblock 16 ebenso angehoben, so daß der Abstand zwischen dem Kerbmesser 7 und dem Stempel 8 unabhängig von der Einstellung des Anschlages 13 stets gleich bleibt.

Der Halteblock 16 für das transversale Absenken des Kerbmessers 7 ist in Figur 2 vergrößert im Längsschnitt dargestellt. In einem Führungskanal des Halteblocks 16 ist eine Messerhalterung 17 längsverschieblich gelagert. Die Zugfeder 18 bewirkt eine nach unten gerichtete Kraft vorbestimmter Größe auf die Messerhalterung 17, welche deshalb nach dem Drehen der Exzenterwelle 19 nach unten gezogen wird, so daß das Kerbmesser 7 die LWL 20, welche vorher durch Heben des Stempels 8 gespannt wurden einkerben bzw. anritzen kann. Sobald die Kerbtiefe ein notwendiges Ausmaß erreicht hat, brechen die LWL an der Kerbstelle. Dabei darf die Federkraft größer sein, als die zum Kerben erforderliche Mindestkraft. Damit andererseits die Senkbewegung des Kerbmessers sanft und nicht zu schnell erfolgt, ist ein Flüssigkeitsdämpfer 21 üblicher Bauart vorgesehen.

Die Ausgangslage für das Kerbmesser 7 und dessen nachfolgende Bewegungslänge müssen genau und reproduzierbar eingehalten werden. Die Bewegungslänge wird durch die Exzenterwelle 19 vorgegeben. Die Ausgangslage wird einerseits durch spielfreie Lagerung des Haltearms 14 und andererseits durch deren Anlage an einem Begrenzungsanschlag 22 (Fig. 3) gewährleistet, gegen welchen der Haltearm 14 mitttels des Klemmhebels 23 gedrückt ist.

Die Zeichnungen stellen die erfindungsgemäße Vorrichtung zum besseren Verständnis in vereinfachter Weise dar. Das gilt insbesondere für die Lagerungen und Führungen, welche sehr genau und spielfrei sein müssen. Dem Fachmann sind geeignete Präzisionsführungen und spielfreie Lagerungen allgemein bekannt, so daß auf deren detaillierte Darstellung verzichtet wurde.

**Patentansprüche**

1. Verfahren zum Trennen einer Gruppe von Lichtwellenleiter (20), bei welchem ein Längenabschnitt der Lichtwellenleiter (20) in gestreckter Lage und parallel in einer Ebene geführt zwischen zwei Klemmeinrichtungen (5,6) einer Trennvorrichtung gehalten wird, und bei welchem die Lichtwellenleiter durch ein im mittleren Bereich des Längenabschnitts (2) angreifendes, sich über sämtliche Lichtwellenleiter erstreckendes gemeinsames Kerbmesser (7) geritzt werden, indem dessen etwa parallel zur Ebene der Lichtwellenleiter verlaufende Kerbschneide zur Fläche des Stempels (8) hin bis zu einem durch einen Anschlag vorgegebenen Abstand gedrückt wird, welcher kleiner als der minimal mögliche Durchmesser der Lichtwellenleiter (20) ist, und bei welchem die Lichtwellenleiter über einen gegen die Lichtwellenleiter gedrückten gewölbten Stempel (8) gespannt und dabei an der Kerbstelle getrennt werden, dadurch gekennzeichnet, daß die Lichtwellenleiter (20) zunächst in die Klemmeinrichtung (5,6) geklemmt werden, daß danach der Stempel (8) bis an einen Anschlag (13) gegen die Lichtwellenleiter (20) gedrückt wird, so daß in den Lichtwellenleitern (20) eine mechanische Spannung entsteht, und daß das Kerbmesser (7) auf die Lichtwellenleiter (20) gedrückt wird, wodurch die Lichtwellenleiter (20) so weit eingekerbt werden, daß sie infolge der durch den Druck des Stempels (8) bewirkten Spannung individuell getrennt werden.

2. Vorrichtung zum Trennen einer Gruppe von Lichtwellenleitern (20) mit einem Gehäuse (1), mit Klemmeinrichtungen (5,6), mittels welcher eine Gruppe von Lichtwellenleitern (20) beiderseits der Trennstelle einklemmbar ist, mit einem Stempel (8), an dessen gewölbte Oberfläche die Lichtwellenleiter (20) im Bereich der Trennstelle anlegbar sind und mit einem sich über sämtliche Lichtwellenleiter (20) erstreckenden Kerbmesser (7), welches in Richtung auf die gewölbte Oberfläche des Stempels (8) gegen einen verstellbaren Anschlag (13) bis zu einer gewünschten Kerbposition bewegbar ist, dadurch gekennzeichnet, daß der Stempel (8) gegen die einzulegenden Lichtwellenleiter (20) bis an einen Anschlag (13) drückbar ist, wodurch die Vorspannung der Lichtwellenleiter (20) ausschließlich durch Bewegung des Stempels (8) verursacht wird.

3. Vorrichtung nach Anspruch 2, dadurch gekennzeichnet, daß ein Haltearm (14) für das Kerbmesser (7) mit dem Stempel (8) kinematisch gekoppelt ist.

4. Vorrichtung nach Anspruch 3, dadurch gekennzeichnet, daß ein Halteblock (16) für das Kerbmesser (7) an einem zur Richtung der Lichtwellenleiter (20) im wesentlichen in senkrechter Ebene von einer zurückgeschwenkten Ruhelage in eine spielfrei durch einen Festanschlag (22) definierte Arbeitslage schwenkbaren Haltearm (14) angeordnet ist, so daß das Kerbmesser (7) in der Arbeitslage mit geringem Abstand den einzulegenden Lichtwellenleiter (20) gegenüberliegt, und daß das Kerbmesser (7) bzw. dessen Halterung (17) in senkrechter Richtung gegen die einzulegenden Lichtwellenleiter (20) bewegbar ist.

5. Vorrichtung nach Anspruch 3 oder 4, dadurch gekennzeichnet, daß die Andruckkraft des Kerbmessers (7) durch eine Pufferfeder (18) begrenzt ist.

6. Vorrichtung nach einem der Ansprüche 3 bis 4, dadurch gekennzeichnet, daß die Bewegungsgeschwindigkeit des Kerbmessers (7) durch ein Dämpfungselement (21) gedämpft ist.

**Claims**

1. A method of severing a group of optical fibres (20), in which method lengths of said fibres (20) are so held between two clamping devices (5,6) of a cutting arrangement that said fibre lengths are stretched and extend parallel to each other in a common plane, and in which method the optical fibres are notched by a common notcher (7) extending across the width of the group of optical fibres and centrally engaging said fibres (20), in that the cutting edge extending approximately parallel to the plane of the optical fibres is pressed on to a stop determining the distance between said cutting edge and the surface of the anvil (8), said distance being smaller than the smallest possible diameter of the optical fibres (20) and being such that the optical fibres are tensioned over a convex anvil (8) pressed against the optical fibres and are severed at the location of the notch, characterized in that the optical fibres (20) are first clamped in a clamping device (5,6), after which the anvil (8) is pressed against the optical fibres (20) up to a stop (13), thereby causing the optical fibres (20) to become mechanically tensioned, after which the notcher (7) is pressed on the optical fibres (20), thereby forming a notch of such depth in said fibres (20) that they are individually severed as a result of the tension brought about by the anvil (8).

2. An arrangement for severing a group of optical fibres (20), comprising a housing (1), clamping devices (5,6) for clamping a group of optical fibres (20) on either side of the point of fracture, an anvil (8) having a convex surface for supporting the optical fibres (20) at the location of the point of fracture, and comprising a notcher (7) extending across the width of the group of optical fibres (20) and being movable in the direction of the convex surface of the anvil (8) up to an adjustable stop (13) to obtain a desired position for cutting, characterized in that the anvil (8) can be pressed against the optical fibres (20) until its movement is arrested by a stop (13), thus, the optical fibres are prestressed exclusively by the anvil (8).

3. An arrangement as claimed in Claim 2, characterized in that a mounting arm (14) for the notcher (7) is kinematically coupled to the anvil (8).

4. An arrangement as claimed in Claim 3, characterized in that a holder means (16) for the notcher (7) is fitted on a pivotable mounting arm (14) which can be swung, without clearance, from a swung back rest position to an operational position which is defined by a positive stop (22), in a direction which extends substantially transversely to that of the optical fibres (20), so that, in the operational position, the notcher (7) is situated opposite and at a small distance from the optical fibre (20), and in that the notcher (7) and the holder (17) can be moved so as to contact the optical fibres (20) at right angles.

5. An arrangement as claimed in Claim 3 or 4, characterized in that the pressure exerted by the notcher (7) is limited by a cushioning spring (18).

6. An arrangement as claimed in one of the Claims 3 or 4, characterized in that the rate of movement of the notcher (7) is damped by a damper (21).

**Revendications**

1. Procédé pour séparer un groupe de guides de lumière (20), suivant lequel une partie longitudinale des guides de lumière (20) est maintenue dans une position allongée et guidée parallèlement dans un plan entre deux dispositifs de serrage (5,6) d'un dispositif de séparation, et suivant lequel les guides de lumière sont entaillés par un couteau commun attaquant dans la zone centrale de la partie longitudinale (2) et s'étendant sur tous les guides de lumière, du fait que son tranchant s'étendant à peu près parallèlement au plan des guides de lumière est pressé vers la surface du poinçon (8) par une butée sur une distance prédéterminée inférieure au diamètre le plus petit possible des guides de lumière (20), et suivant lequel les guides de lumière sont tendus sur un poinçon arqué (8) et sont séparés à l'endroit entaillé, caractérisé en ce que les guides de lumière (20) sont d'abord serrés dans le dispositif de serrage (5,6), en ce que le poinçon (8) est ensuite pressé jusqu'à une butée (13) contre les guides de lumière (20) de manière à engendrer une tension mécanique dans les guides de lumière (20), et en ce que le couteau (7) est pressé sur les guides de lumière (20) de sorte que les guides de lumière (20) sont entaillés sur une distance telle qu'ils soient séparés individuellement à la suite de la tension engendrée par la pression du poinçon (8).

2. Dispositif pour séparer un groupe de guides de lumière (20), comportant un boîtier (1), des dispositifs de serrage (5,6) permettant de serrer un groupe de guides de lumière (20) des deux côtés de l'endroit de séparation, un poinçon (8) contre la surface arquée duquel les guides de lumière (20) peuvent être disposés dans la zone de l'endroit de séparation, et un couteau (7) s'étendant sur tous les guides de lumière (20), pouvant être déplacé dans la direction de la surface arquée du poinçon (8), contre une butée réglable (13)jusqu'à une position d'entaillage souhaitée, caractérisé en ce que le poinçon (8) peut être pressé contre les guides de lumière (20)jusqu'à une butée (13), opération par laquelle la tension préliminaire des guides de lumière (20) est uniquement engendrée par le mouvement du poinçon (8).

3. Dispositif selon la revendication 2, caractérisé en ce qu'un bras de fixation (14) pour le couteau (7) est couplé cinématiquement avec le poinçon (8).

4. Dispositif selon la revendication 3, caractérisé en ce qu'un bloc de fixation (16) pour le couteau (7) est attaché à un bras de fixation (14) pivotant dans la direction des guides de lumière (20) en principe dans un plan perpendiculaire à partir d'une position de repos occupée après un pivotement de retour vers une position de travail sans jeu définie par une butée fixe, de sorte que le couteau (7) dans la position de travail est situé à une faible distance en face du guide de lumière à introduire et en ce que le couteau (7) ou son support (17) peut être déplacé perpendiculairement contre les guides de lumière à introduire (20).

5. Dispositif selon l'une des revendications 3 ou 4, caractérisé en ce que la force de serrage du couteau (7) est limitée par un ressort de tampon (18).

6. Dispositif selon l'une des revendications 3 ou 4, caractérisé en ce que la vitesse de mouvement du couteau (7) est amorti par un organe amortisseur (21).

Fig. 1

Fig. 2

Fig. 3